# EUROPEAN PATENT SPECIFICATION

(11) **EP 3 124 842 B1**
(45) Date of publication and mention of the grant of the patent: **22.02.2023**
(21) Application number: 14887154.4
(22) Date of filing: 28.03.2014
(51) Int. Cl.: F16L 3/16, F16L 3/10

(54) **MOVABLE PIPELINE-SUPPORT AND SUPPORT ASSEMBLY THEREOF**
BEWEGLICHE PIPELINESTÜTZE UND STÜTZANORDNUNG DAFÜR
SUPPORT DE CONDUIT MOBILE ET UNITÉ DE SUPPORT

(43) Date of publication of application: 01.02.2017
(73) Proprietor: Public Joint Stock Company "Transneft", Moscow 119180 (RU); Joint-Stock Company "Transneft Siberia", Tyumen 625048 (RU); Limited Liability Company "Transneft Research and Development Institute for Oil and Oil Products Transportation", Moscow 117186 (RU)
(72) Inventor: LISIN, Yury Viktorovich, Moscow 119180 (RU); MIKHEEV, Yurii Borisovich, Moscow, 125502 (RU); BONDARENKO, Valeriy Vyacheslavovich, Chelyabinsk 454000 (RU); SURIKOV, Vitaly Ivanovich, Balashikha 143390 (RU); FEDOTA, Vladimir Ivanovich, Moscow 119607 (RU); CHENTSOV, Alexander Nikolaevich, Moscow 119333 (RU)
(74) Representative: Spengler, Robert
(86) International application number: PCT/RU2014/000216
(87) International publication number: WO 2015/147681

(56) References cited:
- RU-U1- 64 316
- RU-U1- 99 015
- RU-U1- 124 350
- RU-U1- 127 853
- US-A- 4 128 219
- US-A- 4 128 219

## Description

### TECHNICAL FIELD

The claimed group of inventions relates to the construction of the above-ground pipelines and can be used for pipelining in severe geological conditions, for example, in the conditions of permafrost, including the presence of a small slope.

From the prior art it is known a sufficient number of different types of movable supports. All of them are designed in such a way that, perceiving vertical and horizontal loads from the pipeline, at the same time they do not interfere with its movement in the direction of its axis and in the transverse direction.

Movable supports are installed to ensure the free movement of pipelines on supports at thermal strains and possible hydraulic impacts. These supports perceive vertical load - the force of gravity of pipelines placed on them with valves and heat insulation of various types - as well as horizontal load, that depends on tower base friction factor. The movable support design affects the value of friction factor. The most common movable supports are sliding support moving together with the pipe on various support structures.

### PRIOR ART

From the prior art it is known the U.S. patent No. 4128219, on application from 17.05.1976, the "freely-movable support", that allows a longitudinal and transverse movement of piping caused by thermal contraction and expansion. The construction is formed by mutually crossed vertically and horizontally oriented supporting rod elements with dismountable connection with the possibility of adjusting the position of the pipeline. The pipeline is covered by rigid clamps fixed to the movable horizontal support element. The design of the support and support assembly provides the ability to adjust the position of the pipeline many times with its quite rigid fixation.

The disadvantages of the known technical solutions include the relatively large number of connections, ties and fasteners, screws and nuts for height adjustment, which creates certain limitations in terms of use of this invention, as well as some of the challenges in conducting preventive maintenance and inspection of the support. The support was designed with a large number of places difficult for inspection, so if you need at least partial repair, you will need to disassemble the support. Additionally, the absence of rigid connection between piles may result in the rejection of piles if soil heaving and the support falling.

Similar known technical solution is also known from the prior art, the utility model RF No. 128274 "SUPPORT FOR PIPELINE WITH GRADE". In accordance with the formula of this utility model, the support contains covering the pipeline half-yoke, base plate and stand, movably interconnected, the cradle made in the form of a body mounted on a stand with the ability to move around it.

The main disadvantage of this design is inclined position of the sliding surface of the support, which increases the load on the pipeline during operation on soils with a slope. In addition, the design contains no constraints of support movement, which creates certain risks of displacement beyond the design determined values.

Longitudinally movable support pipe is the closest to the claimed group of inventions to the technical essence, consisting of cradle with clamps covering the pipeline and base plate with hinges, and are supplied with a stand attached to the cradle and installed in the hinges. The side cheeks of the stand are made beveled to allow tilting of the saddle relative to the base plate (RF patent for utility model No. 64316). Support with its plate is installed on a prepared site. The pipe is put down on the cradle and fixed with clamps. Free standing plate (tower base) position on the platform ensures free movement of the pipe. Short stand with hinges increases the adaptability of the support to the location.

This support moves with the pipeline on the platform, when the length of the pipeline is increased (under the influence of positive temperatures), it affects the pipeline with the increased loads arising from the friction of the plate on the pilework supporting surface. In addition, the absence of friction pads between the cradle and the insulated pipe may cause damage to pipe jacket and insulation.

The object of the claimed group of technical solutions is to ensure the reliability and functionality of a design when operating in difficult geological conditions associated with extremely low temperatures and possibility of permafrost heaving, reducing the risk of deformation of the pipeline.

The technical result achieved when using the claimed group of inventions is to ensure the uniform distribution of the load from the pipeline to the bedding cradle, the possibility of displacement of the movable part of a pipeline support in given design conditions, prevention of deformation in the event of possible soil heaving through the implementation of compensating deformation of the unit bearing on a pile of the hinged type.

### INVENTION DISCLOSURE

The set object is solved in that, in accordance with the claimed technical solution, the movable pipeline support includes associated moving and fixed parts. In this case the movable part includes the cradle, made in the form of a semi-cylinder, at least with two semi-annular stiffeners (frames) located on the outside of the cradle, detachable half-yokes, providing fixation of the pipe in the cradle, side cheeks, rigidly welded to the frame and movably fixed to the tower base by hinge joint, while the base is made with the possibility of sliding movement along the stationary surface of the support. When manufacturing the movable support with four frames, the latter are placed at an equal distance from each other, at that the far frames are made at the ends of the cradle. Hinge joint is equipped with anti-friction bushings, insulating hinge elements from corrosion, reducing load from the friction and increasing the durability of the unit. The tower base is a flat surface provided with anti-friction corrosion-resistant spacers, for example, plates made of modified fluoropolymer or thermoplastic material based on polyethylene with anti-friction properties, at that the ends of the tower base are upwardly bent with the formation of sidesteps. Between half-yokes and pipeline and between the cradle and the pipeline, friction pads are placed, which made of, e.g. siloxane, providing electrical isolation of the pipeline from pile foundation to minimize the corrosion processes, as well as protecting the pipeline jacket from damage when moving.

The fixed part of the support can be made for two-piled and four-piled foundation.

For the two-piled foundation, the fixed part of the support is a pilework table, made in the form of interconnected beams, headers and rails, on which the base plate with the sliding surface is placed, and two supporting assemblies of the hinged type, through which the pilework table is fixed to the pile foundation.

For the four-piled foundation the fixed part of the support is a pilework table with base plate with a sliding surface mounted on the longitudinal beams (longitudinally located relative to the axis of the pipeline) and four supporting assemblies of the hinged type, through which the longitudinal beams are fixed to the pile foundation.

Side stops is rigidly fixed, e.g. by welding, on the base plate opposed to each other at a distance, providing the possibility of calculated transverse displacement of the support movable part and deviation of the mounting supports and the installation of the pipeline. The sliding surface of the base plate is formed by corrosion-resistant steel sheet, reinforced on the base plate. Also the objective is solved with structurally different performance of the supporting assembly, which is a bearing sleeve installed freely with a gap on two half-rings rigidly welded to the pile foundation, which is placed a support plate with a hole corresponding to the inner diameter of the sleeve, wherein the plate is connected with the sleeve with the vertical rails and a horizontal stiffeners that increase the rigidity of the supporting assembly. The pilework table can be mounted rigidly on the base plate by welding when mounting the support or semi-rigidly by bolted connection with a gap ensuring the flexibility of the connections required when soil heaving (drawdown) under the pile foundation. Half-rings are fixed to the pile with the technological gap between the ends of the half rings. The gap between the inner diameter of the sleeve and the outer diameter of the piles is not less than 8 mm. In other words, the gap between the inner diameter of the sleeve and the outer diameter of the piles provides the possibility of lifting (lowering) the pile in case of possible soil heaving (drawdown) up to 400 mm. The width of the half-ring defined as the difference between the external and internal diameter corresponds to the thickness of the sleeve defined as the difference between its outer and inner diameter increased by the size of the gap between sleeve and pile.

### BRIEF DESCRIPTION OF DRAWINGS

The claimed invention is illustrated by the following drawings.
Figure 1 schematically shows a view along the axis of the pipeline to the claimed design characterized by the position of side stops in the vicinity of the base (longitudinally-movable support).
Figure 2 schematically shows a view along the axis of the pipeline to the claimed pipeline support characterized by the position of side stops at a certain distance from the base (freely-movable support).
Figure 3 shows a side view of the claimed design for two-piled foundation.
Figure 4 shows a side view of the claimed design for four-piled foundation with longitudinal beams.
Figure 5 schematically shows an image of the supporting sleeve.

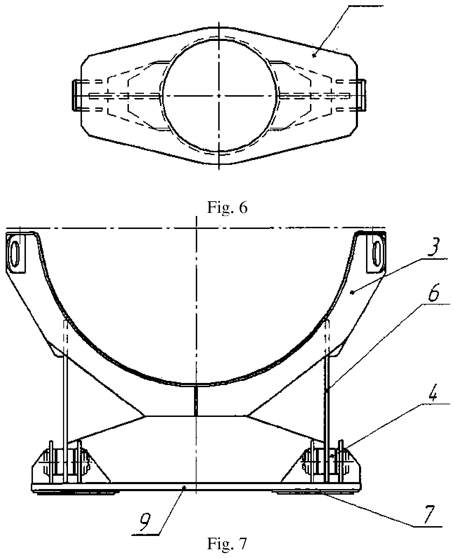

Figure 6 shows a view of the base plate of the sleeve with the hole.
Figure 7 schematically shows the image of the movable part of support - cradle body of the claimed design.

Positions indicated on drawings:
The movable part - the cradle body includes:

| | |
|---|---|
| 1 | - cradle; |
| 2 | - half-yokes; |
| 3 | - frames (stiffeners); |
| 4 | - hinged joint; |
| 5 | - bolted joint; |
| 6 | - side cheeks; |
| 7 | - anti-friction pads; |
| 8 | - tower base sidestep; |
| 9 | - tower base. |

The fixed part of the support includes:

| | |
|---|---|
| 10 | - pilework table; |
| 11 | - supporting sleeve; |
| 12 | - half-rings; |
| 13 | - support plate of the support sleeve with the hole; |
| 14 | - side stops; |
| 15 | - longitudinal beam; |
| 16 | - pile (not part of support). |

### THE PREFERRED EMBODIMENT OF INVENTION

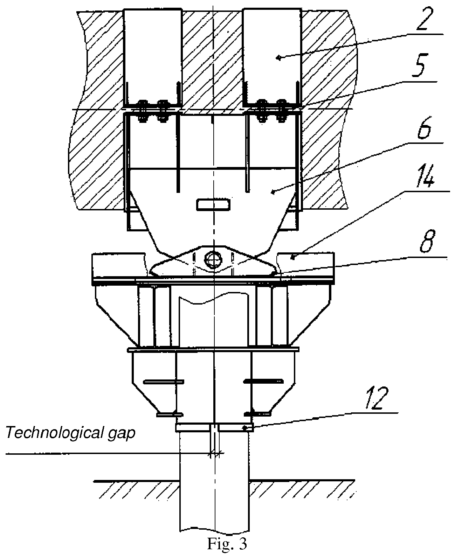

The claimed movable support relates to the class of sliding supports and comprises of the movable and stationary parts interacting with each other by providing the possibility of sliding of the movable part on the surface of the fixed part. The movable part of a pipeline support is a complex framework, having a semi-cylindrical cradle 1 for location of the supported insulated pipe, reinforced with frames 3 made in the form of flat half-rings. The framework uses two or more frames. Figure 3 shows the structure of the movable support with four frames placed at an equal distance from each other. At that the frames are fixed on the ends of the cradle 1. The width of the half-ring frame depends on the pipeline diameter and calculated loads.

All contact surface of the semi-cylindrical cradle is provided with electrically insulating friction pad made of, for example, siloxane. To the ends of the cradle detachably attached two half-yokes 2 for fixing the pipeline on the cradle by bolted connection 5. The inner surface of the half-yokes is also provided with an electrically insulating friction pad made, for example, of siloxane. The side cheeks 6 are rigidly attached (by welding) to the cradle and are forming the backbone of cradle. The side cheeks are plates fixed by the horizontal welds to the cradle on either side of the pipeline, wherein the frames are welded to the side cheeks for strengthening and hardening of the entire support device. The frames in this case also tighten the side cheeks. The shape of the plates contributes to hardening of the support structure. The side cheeks are movably mounted in two hinges, which are made on the tower base of movable part of the support by welding to the two lateral cheeks of the tower base. Hinges 4 is equipped with anti-friction bushings, preventing jamming of the connection and providing corrosion resistance. The tower base 9 is a flat surface provided with anti-friction, corrosion-resistant pads 7 made, for example, of plates of modified fluoropolymer, wherein the ends of the tower base are upwardly bent with the formation of the sidesteps 8, which increase the stiffness of the tower base in the transverse direction. The sidesteps are made to prevent clogging of the movable part of the support when shifting in the case of formation of the snow cover and icing of the pilework support surface. The tower base has holes to prevent the accumulation of rainwater. The movable part of the support is installed with its tower base on the surface of the fixed part of the support without any mutual attachment. The fixed part of the support is a pilework table 10 and the assemblies of its attachment to the pile foundation.

In the case of mounting the pile foundation of the support on four piles, the longitudinal beams are used, which function as supporting elements of the pilework. They are mutually connecting adjacent piles, lying parallel to the axis of the pipeline.

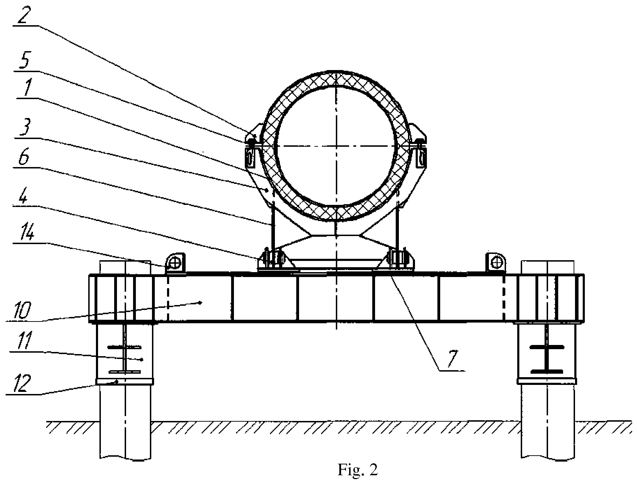

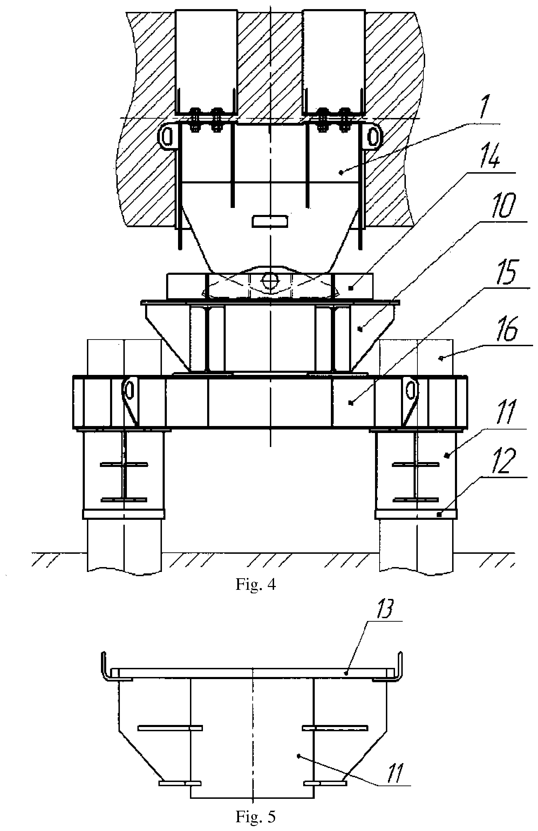

Pilework table is made in the form of a single-level two interconnected beams rigidly connected in the same plane and reinforced with rigid vertically oriented scarves and jumpers. In the case of the two-piles foundation (figure 2), the pilework table is mounted directly on the foundation piles, and in case of using four-pile foundation (figure 4) the pilework table is mounted on the foundation through the two longitudinal beams 15, which connect the two piles 16 on each side, while the fixing to the piles are made through the supporting assembly of the hinged type. Pilework table is covered with a support plate, the upper surface of which is moving to the base of the movable part of the support that is possible when using the corrosion resistant steel sheet on the base plate, made for example of steel 08H18N10.

The choice of foundation type is based on the load-bearing capacity of the soil and is determined at the pipeline design stage.

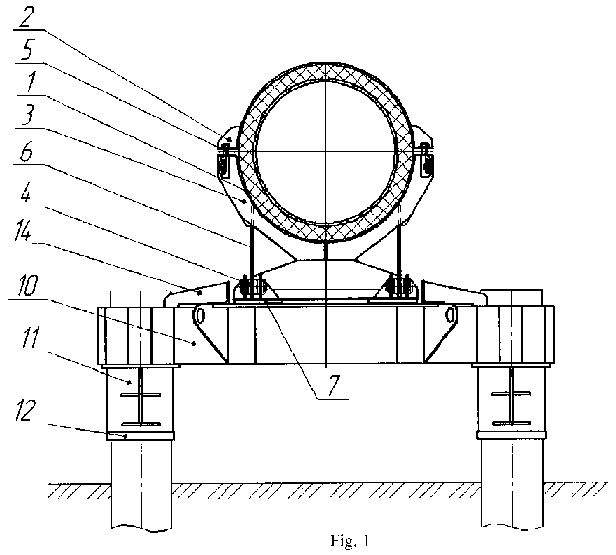

On the surface of the pilework base plate the side stops - limiters 14 are fixed with the possibility of changing their position, which are the long angles oriented along the geometric axis of the pipeline. Mounting the side stops directly near the base at the sides at a distance of not more than 50 mm limits the possibility of transverse displacement, allowing only a longitudinal movement (figure 1 shows a longitudinally movable support). Accordingly, the more remote mounting of the side stops provides the possibility of transverse displacement of the base over the surface of the pilework base plate (figure 2 shows a freely-movable support). From the prior art the rigid attachment of the pilework to the piles is known, that in case of possible soil heaving or drawdown can lead to deformation of metal structures, the damage to pilework weld joints and fall of support. The claimed invention presents the supporting assembly, which using the connection of pilework with the foundation allows to provide a strain-free condition of a pipeline support when changing the vertical position of the pile by up to 400 mm.

The supporting assembly includes two identical metal half-rings 12, rigidly welded opposite to each other on one vertical level to the piling. The half-rings do not form a full ring after welding, a technological gap of about 30 mm remains between them. The gap allows to compensate the deviation of the piles diameter providing the normalized gap for welding. The height of the half-rings is due to the need to reduce the thermal influence of the neighboring welded joints (upper and lower) and ensure the strength of half-rings. The supporting sleeve 11 is loosely fitted on the half-rings with a gap relative to the pile. The gap is not less than 8 mm. At the same time, the sleeve is selected in a way that its thickness along with the size of the gap corresponds to the width of the half-ring. The base plate 13 is welded to the upper end of the sleeve with a hole corresponding to the inner diameter of the sleeve. The connection of plate 13 with the sleeve is reinforced with at least two vertical gussets reinforced by horizontal ribs. The pilework table is installed and rigidly welded to the sleeve supporting plates. This operation is performed during the installation of the support.

Thus, a rigid connection of pile foundation with a pilework table is made only in the zone of fastening of the half-rings to the piles. Supporting assembly performs the function of a hinge, not a rigid, coupling for compensation of possible deformations of the piles and workability of the movable support.

The claimed design works as follows. During the implementation of works on the above-ground pipelining, the support structures are arranged taking into account the soil quality, its slope, etc.

The heat insulated pipeline is put into the cradle, fixed with the two half-yokes with bolt connection and installed in the design position. The inner surface of the cradle and half-yokes is provided with a dielectric, friction material, for example, siloxane. Due to the presence of the cradle side cheeks hinge joint with the base, the pipeline is self-installed in the design position defined by the profile of the track. Anti-friction pads allow smooth tilt of the cradle with the pipeline, corrosion resistance and durability of the unit. After installation, the pipeline is ready for operation. Regular changes of the transported processing medium temperature, vibration, pressure changes inside the pipeline - all of it causes a constant, often significant (up to 600 mm) pipeline displacements. When using the movable support of the claimed type, the pipeline displacements perceived by support, i.e. by its movable part, whereby the movable part with rigidly fixed the pipeline therein is shifted. The base is slipping, drifting on the surface of the pilework base plate. The presence of anti-friction pads and corrosion resistant pilework base surface provides unhindered movement of the base, significant (up to three times in case of application of not corrosion-resistant steels for friction pair) reduction of horizontal loads on piles and the pipeline from the friction forces. When placing side stops close to the base (to limit lateral movement), the base of the cradle has no way of transverse slide and is moved in the longitudinal direction.

In case of soil heaving or downwards it is possible to change the vertical position of the piles, which can lead to deformation of the support, the fracture of welded joints with the pile and the risk of the pipeline failure. The claimed design of the supporting assembly, due to the lack of a rigid connection with the pile, compensates any possible deformation, since the presence of the gap between the pile and the inner diameter of the coupling, and also free (no hard links) bearing on the half-rings, that are welded to the pile, allows the pilework support surface to tilt at different changes in the vertical position of the opposite piles, at that the friction pads between the cradle and the pipe help to prevent damage to its heat insulation and jacket in case of the pilework inclination.

## Claims

1. Movable support of a pipeline, the moveable support containing associated movable and fixed parts,
the movable part includes a cradle (1), made in the form of a semi-cylinder, at least two half-ringed stiffeners (3) located on an outside of the cradle, detachable half-yokes (2), providing fixation of the pipeline in the cradle,
side cheeks (6), rigidly connected with the cradle and flexibly fixed to a tower base (9) support by a hinged joint (4), wherein the tower base is made with the possibility of sliding movement on the surface of a fixed part of the support, and
**characterised in that** the fixed part of the support includes a pilework table (10) made in the form of interconnected beams (15), jumpers and scarves with a base plate having a sliding surface, the sliding surface being located on top, and further comprising supporting assemblies of the hinged type, through which the pilework table is fastened to the pile (16) foundation, and further comprising a dielectric friction material positioned on an interior surface of the half-yokes and the cradle, and wherein a bearing sleeve (11) is installed freely with a gap relative to the pile (16) foundation on two half-rings (12) rigidly connected to the pile (16) foundation and on which is placed a support plate (13) with a hole corresponding to the inner diameter of the bearing sleeve (11), wherein the support plate (13) is connected with the bearing sleeve (11) by vertical rails and horizontal stiffeners, that increase the rigidity of the supporting assemblies.

2. Movable support of the pipeline of claim 1, **characterized in that** the hinged joint (4) is equipped with anti-friction bushings (7), protecting the hinge elements from corrosion and reducing the efforts of friction.

3. Movable support of the pipeline of claim 1, **characterized in that** the tower base (9) is a flat surface provided with anti-friction corrosion-resistant pads (7), for example, a modified fluoropolymer, wherein the ends of the base are upwardly bent with the formation of sidesteps (8).

4. Movable support of the pipeline of claim 1, further comprising side stops (14) rigidly fixed, e.g. by welding, on the base plate (9) opposed to each other at a distance from the lateral edge of the tower base (9), providing the possibility of calculated transverse displacement of the movable part of the support.

5. Movable support of the pipeline of claim 1, **characterized in that** the sliding surface of the base plate (13) is formed by corrosion-resistant steel sheet, fixed on the base plate.

6. Movable support of the pipeline of claim 1, **characterized in that** the pile (16) foundation is made four-piled, wherein the pilework table is mounted on the interconnected beams (15).

7. Movable support of the pipeline of claim 1, **characterized in that** the pile foundation is made two-piled.

8. Movable support of the pipeline of claim 1, **characterized in that** the half-rings (12) are fixed to the pile (16) on one altitude level with a gap between the ends of the half-rings.

9. Movable support of the pipeline of claim 1, **characterized in that** the gap between the inner diameter of the sleeve and the outer diameter of the piles (16) is not less than 8 mm.

10. Movable support of the pipeline of claim 1, **characterized in that** the gap between the internal diameter of the sleeve (11) and the external diameter of the piles (16) and the free bearing of the sleeve to the half-rings (12) provides the possibility of changing the vertical position of the pile in case of possible soil heaving (drawdown) up to 400 mm.

11. Movable support of the pipeline of claim 1, **characterized in that** the half-ring (12) width defined as the difference between the internal and external diameter, corresponds to the thickness of the sleeve (11), defined as the difference between its outer and inner diameter increased by the size of the gap between the sleeve and the pile (16).

12. Movable support of the pipeline of claim 1, **characterized in that** the base plate with a hole is rigidly attached to the pilework table by a welded joint.

13. Movable support of the pipeline of claim 1, **characterized in that** the base plate (13) with a hole is semi-rigidly attached to the pilework table by a bolted connection having a gap, providing the flexibility of the bolted connection needed in case of heaving (drawdown) of piles (16).

## Patentansprüche

1. Bewegliche Halterung einer Rohrleitung, wobei die bewegliche Halterung damit zusammenhängende bewegliche und feste Teile enthält;
das bewegliche Teil eine Hängebühne (1) in Form eines Halbzylinders, mindestens zwei auf einer Außenseite der Hängebühne angeordnete Halbring-Versteifungselemente (3), abnehmbare Halbgabeln (2), die die Befestigung der Rohrleitung in der Hängebühne gewährleisten, Seitenteile (6), die steif mit der Hängebühne verbunden und über ein Scharniergelenk (4) flexibel auf einem Turmfußträger (9) befestigt sind,
wobei die Konstruktion des Turmfusses die Möglichkeit einer Verschiebung auf der Oberfläche eines festen Teils der Halterung gewährt,
**dadurch gekennzeichnet, dass** das feste Teil der Halterung einen Pfahltisch (10) in Form miteinander verbundener Balken (15), Brücken und Schäftverbindungen mit einer Grundplatte mit Gleitfläche, wobei die Gleitfläche auf der Oberseite angeordnet ist, und
ferner umfassend klappbare Montagestützen, durch die der Pfahltisch auf dem Pfahlfundament (16) befestigt ist, und
ferner umfassend ein auf einer Innenfläche der Halbgabeln und der Hängebühne angeordnetes dielektrisches Reibmaterial, und
wobei eine Lagerhülse (11) frei mit einem Spalt relativ zum Pfahlfundament (16) auf zwei Halbringen (12) installiert ist, die steif mit dem Pfahlfundament (16) verbunden sind, und auf denen eine Stützplatte (13) mit einer dem Innendurchmesser der Lagerhülse (11) entsprechenden Bohrung angeordnet ist,
wobei die Stützplatte (13) über vertikale Schienen und horizontale Versteifungselemente, die die Rigidität der Montagestützen erhöhen, mit der Lagerhülse (11) verbunden ist.

2. Halterung nach Anspruch 1, **dadurch gekennzeichnet, dass** das Scharniergelenk (4) mit Gleitbuchsen (7) ausgestattet ist, die die Scharnierelemente vor Korrosion schützen und die Wirkung der Reibung reduzieren.

3. Halterung nach Anspruch 1, **dadurch gekennzeichnet, dass** der Turmfuß (9) eine flache Oberfläche mit korrosionsbeständigen Gleitpolstern (7) ist, so z.B. ein modifiziertes Fluorpolymer, wobei die Enden des Fußes unter Bildung von Seitenstufen (8) nach oben gebogen sind.

4. Halterung nach Anspruch 1, ferner umfassend Seitenanschläge (14), die auf der Grundplatte (9) in einem Abstand zur Seitenkante des Turmfußes (9) steif befestigt, z.B. verschweißt, sind und die Möglichkeit einer berechneten Verschiebung des beweglichen Teils der Halterung in Querrichtung gewähren.

5. Halterung nach Anspruch 1, **dadurch gekennzeichnet, dass** die Gleitfläche der Grundplatte (13) sich aus auf der Grundplatte befestigtem korrosionsbeständigem Stahlblech zusammensetzt.

6. Halterung nach Anspruch 1, **dadurch gekennzeichnet, dass** das Pfahlfundament (16) aus vier Pfählen besteht, wobei der Pfahltisch auf den miteinander verbundenen Balken (15) montiert ist.

7. Halterung nach Anspruch 1, **dadurch gekennzeichnet, dass** das Pfahlfundament aus zwei Pfählen besteht.

8. Halterung nach Anspruch 1, **dadurch gekennzeichnet, dass** die Halbringe (12) auf einer Höhe mit einem Spalt zwischen den Enden der Halbringe auf dem Pfahl (16) befestigt sind.

9. Halterung nach Anspruch 1, **dadurch gekennzeichnet, dass** der Spalt zwischen dem Innendurchmesser der Hülse und dem Außendurchmesser der Pfähle (16) mindestens 8 mm beträgt.

10. Halterung nach Anspruch 1, **dadurch gekennzeichnet, dass** der Spalt zwischen dem Innendurchmesser der Hülse (11) und dem Außendurchmesser der Pfähle (16) und dem freien Lagerung der Hülse auf den Halbringen (12) die Möglichkeit einer Änderung der vertikalen Lage des Pfahls bei evtl. Bodenhebung bis zu 400 mm gewährt.

11. Halterung nach Anspruch 1, **dadurch gekennzeichnet, dass** die als Unterschied zwischen Innen- und Außendurchmesser definierte Halbringbreite (12) der als Unterschied zwischen Außen- und Innendurchmesser, vergrößert um die Größe des Spalts zwischen Hülse und Pfahl (16), definierten Dicke der Hülse (11) entspricht.

12. Halterung nach Anspruch 1, **dadurch gekennzeichnet, dass** die Grundplatte mit Bohrung über eine Schweißverbindung steif auf dem Pfahltisch befestigt ist.

13. Halterung nach Anspruch 1, **dadurch gekennzeichnet, dass** die Grundplatte (13) mit Bohrung über eine Schraubverbindung mit Spalt halbsteif auf dem Pfahltisch befestigt ist, was eine Flexibilität der Schraubverbindung bei Pfahlhebungen (16) gewährleistet.

## Revendications

1. Support mobile d'une conduite, le support mobile contenant des parties mobile et fixe associées,
la partie mobile comprend un berceau (1) réalisé selon une forme semi-cylindrique, au moins deux raidisseurs à demi-anneau (3) situés sur un extérieur du berceau, des demi-culasses détachables (2) fournissant la fixation de la conduite dans le berceau,
des joues latérales (6) rigidement raccordées avec le berceau et fixement fixées à un support de base de tour (9) par un joint articulé (4), dans lequel la base de tour est réalisée avec la possibilité d'effectuer un mouvement de coulissement sur la surface d'une partie fixe du support, et
**caractérisé en ce que** la partie fixe du support comprend une table sur pilotis (10) réalisée sous la forme de poutres interconnectées (15), de bretelles et d'assemblages avec une plaque de base ayant une surface de coulissement, la surface de coulissement étant positionnée sur le dessus, et comprenant en outre des ensembles de support du type articulé, par le biais desquels la table sur pilotis est fixée à la fondation sur piles (16) et comprenant en outre un matériau de friction diélectrique positionné sur une surface intérieure des demi-culasses et du berceau, et dans lequel un manchon de palier (11) est librement installé avec un espace par rapport à la fondation sur piles (16) sur deux demi-anneaux (12) rigidement raccordés à la fondation sur piles (16) et sur laquelle est placée une plaque de support (13) avec un trou correspondant au diamètre interne du manchon de palier (11), dans lequel la plaque de support (13) est raccordée avec le manchon de palier (11) par des rails verticaux et des raidisseurs horizontaux, qui augmentent la rigidité des ensembles de support.

2. Support mobile de conduite selon la revendication 1, **caractérisé en ce que** le joint articulé (4) est équipé avec des douilles antifriction (7), protégeant les éléments de charnière contre la corrosion et réduisant les efforts de friction.

3. Support mobile de conduite selon la revendication 1, **caractérisé en ce que** la base de tour (9) est une surface plate prévue avec des patins antifriction résistants à la corrosion (7), par exemple, un polymère fluoré modifié, dans lequel les extrémités de la base sont fléchies vers le haut avec la formation de marches latérales (8).

4. Support mobile de conduite selon la revendication 1, comprenant en outre des butées latérales (14) rigidement fixées, par exemple, par soudage, sur la plaque de base (9) opposées entre elles à une distance du bord latéral de la base de tour (9), fournissant la possibilité de déplacement transversal calculé de la partie mobile du support.

5. Support mobile de conduite selon la revendication 1, **caractérisé en ce que** la surface de coulissement de la plaque de base (13) est formée par une tôle résistante à la corrosion, fixée sur la plaque de base.

6. Support mobile de conduite selon la revendication 1, **caractérisé en ce que** la fondation sur piles (16) est réalisée avec quatre piles, dans lequel la table sur pilotis est montée sur les poutres interconnectées (15).

7. Support mobile de conduite selon la revendication 1, **caractérisé en ce que** la fondation sur piles est réalisée avec deux piles.

8. Support mobile de conduite selon la revendication 1, **caractérisé en ce que** les demi-anneaux (12) sont fixés à la pile (16) sur un niveau de hauteur avec un espace entre les extrémités des demi-anneaux.

9. Support mobile de conduite selon la revendication 1, **caractérisé en ce que** l'espace entre le diamètre interne du manchon et le diamètre externe des piles (16) n'est pas inférieur à 8 mm.

10. Support mobile de conduite selon la revendication 1, **caractérisé en ce que** l'espace entre le diamètre interne du manchon (11) et le diamètre externe des piles (16) et le palier libre du manchon sur les demi-anneaux (12) offre la possibilité de modifier la position verticale de la pile en cas soulèvement éventuel du sol (affaissement) jusqu'à 400 mm.

11. Support mobile de conduite selon la revendication 1, **caractérisé en ce que** la largeur du demi-anneau (12) définie comme étant la différence entre le diamètre interne et le diamètre externe, correspond à l'épaisseur du manchon (11), définie comme étant la différence entre son diamètre externe et son diamètre interne augmentée par la taille de l'espace entre le manchon et la pile (16).

12. Support mobile de conduite selon la revendication 1, **caractérisé en ce que** la plaque de base avec un trou est rigidement fixée à la table sur pilotis par un joint soudé.

13. Support mobile de conduite selon la revendication 1, **caractérisé en ce que** la plaque de base (13) avec un trou est fixée de manière semi-rigide à la table sur pilotis par un raccordement boulonné ayant un espace, fournissant la flexibilité du raccordement boulonné nécessaire en cas de soulèvement (affaissement) des piles (16).
